(19) Europäisches Patentamt

European Patent Office

Office européen des brevets

(11) **EP 1 432 096 A2**

(12) **DEMANDE DE BREVET EUROPEEN**

(43) Date de publication:
**23.06.2004 Bulletin 2004/26**

(51) Int Cl.⁷: **H02J 7/00**

(21) Numéro de dépôt: **03293070.3**

(22) Date de dépôt: **09.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **20.12.2002 FR 0216342**

(71) Demandeur: **ALCATEL**
**75008 Paris (FR)**

(72) Inventeurs:
• **Berlureau, Thierry**
**33300 Bordeaux (FR)**
• **Lavaur, Pascal**
**33300 Bordeaux (FR)**

(74) Mandataire: **Pochart, François**
**Cabinet Hirsch**
**58, avenue Marceau**
**75008 Paris (FR)**

(54) **Dispositif de contrôle de l'état de charge, à tension constante, d'un ensemble de batterie à générateurs électrochimiques secondaires**

(57) Un dispositif de contrôle de charge (1) d'un ensemble de batterie (2), à générateurs électrochimiques secondaires (7), interfacé entre un chargeur de batterie (3), l'ensemble de batterie et un équipement électrique (4), comprend d'une part, des moyens de mesures (6) délivrant des mesures d'une première grandeur physique, représentative d'au moins une tension (V) aux bornes d'une partie au moins de l'ensemble de batterie (2), et d'une seconde grandeur physique, représentative d'au moins une température (T) d'une partie au moins de l'ensemble de batterie (2), et d'autre part, des moyens de contrôle (8) capables de déterminer, en fonction des mesures des première et seconde grandeurs, une consigne électrique permettant de maintenir l'ensemble de batterie (2) à l'aide d'un courant faible permanent et à tension constante, dans un état de charge choisi et une température moyenne sensiblement inférieure à un seuil choisi.

FIG.3

EP 1 432 096 A2

## Description

L'invention concerne le domaine des générateurs électriques, et plus particulièrement celui des générateurs électrochimiques secondaires, plus connus sous le nom de batteries (ou ensemble de batterie) rechargeable(s).

Les ensembles de batterie rechargeable sont généralement constitués de plusieurs générateurs électrochimiques secondaires (ou générateurs secondaires ou rechargeables, ou encore accumulateurs), montés en série et/ou en parallèle. Ces ensembles de batterie sont habituellement destinés à alimenter en courant ou tension des équipements électriques autonomes, également appelés « applications ».

Parmi ces ensembles de batterie, certains dits « sans maintenance » doivent présenter des durées de vie très longues, typiquement de quelques années à quelques dizaines d'années. C'est notamment le cas des batteries alcalines de type nickel / métal-hydrure (Ni/MH) et nickel / cadmium (Ni/Cd), ou de type lithium / ion (Li/Ion) et Pb/PbO$_2$.

Afin d'atteindre de telles performances, ces ensembles de batterie sont généralement couplés à un chargeur de batterie susceptible de les alimenter en courant ou en tension lorsque leur état de charge le requiert. Cependant, les matières actives qui constituent ces ensembles de batterie ont tendance à se dégrader d'autant plus rapidement que leur température moyenne est élevée et que le nombre de mauvaises détections de fin de charge (ou « abus ») est élevé. Il en résulte qu'au bout d'un temps qui varie en fonction des conditions d'utilisation le chargeur ne peut plus suffire à maintenir les ensembles de batterie à un niveau de performance suffisant aux applications auxquelles ils sont couplés. Par ailleurs, la charge à tension constante de couples tels que Ni-Cd ou Ni-MH pourrait entraîner un emballement thermique.

Afin de tenter de remédier à ces inconvénients, il a été proposé de placer, à l'interface entre le chargeur, l'application et l'ensemble de batterie, un dispositif de contrôle destiné à surveiller l'état de charge de l'ensemble de batterie, et notamment à tenter d'éviter que leur état de charge, d'une part, ne dépasse un seuil de surcharge, et d'autre part, ne tombe en dessous d'un seuil de décharge, sans réaliser de mesure de courant (celle-ci serait en effet chère et complexe du fait qu'elle porterait à la fois sur des petits et des très forts courants de manière précise).

Parmi les nombreux dispositifs de contrôle proposés, deux sont plus particulièrement intéressants. Ils sont décrits dans les documents brevets FR 2 817 403 et JP-11225445. Ils permettent de soumettre l'ensemble de batterie à une charge intermittente, par hachage à l'aide d'un interrupteur électronique, en cas de détection d'une fin de charge. Cette solution est certes intéressante, mais elle impose de mesurer en permanence le courant qui circule dans l'ensemble de batterie, ce qui a tendance à réduire sa fiabilité et à en augmenter sensiblement le coût. De plus, cette solution n'est adaptée qu'aux chargeurs dits « à courant constant » et non aux chargeurs dits « à tension constante ».

L'invention a donc pour but de remédier à tout ou partie des inconvénients précités.

Elle propose à cet effet un dispositif de contrôle de charge d'un ensemble de batterie, à générateurs électrochimiques secondaires (par exemple des accumulateurs nickel / métal-hydrure (Ni/MH), nickel / cadmium (Ni/Cd), lithium / ion (Li/Ion), ou Pb/PbO$_2$), interfacé entre un chargeur de batterie, l'ensemble de batterie et un équipement électrique, et comprenant, d'une part, des moyens de mesures permettant de délivrer des mesures d'une première grandeur physique, représentative de la tension aux bornes d'une partie au moins de l'ensemble de batterie, et d'une seconde grandeur physique, représentative de la température d'une partie au moins de l'ensemble de batterie, et d'autre part, des moyens de contrôle capables de déterminer, en fonction des mesures des première et seconde grandeurs, une consigne électrique (de courant ou de tension selon le type du chargeur) permettant de maintenir l'ensemble de batterie à l'aide d'un courant faible permanent, et à tension constante, dans un état de charge choisi et une température moyenne sensiblement inférieure à un seuil choisi, sans effectuer de mesure dudit courant.

En d'autres termes, grâce à l'invention on garantit un état de charge maximum en un minimum de temps, et on maintient cet état de charge à l'aide d'un courant faible permanent déterminé de sorte que la température des générateurs électrochimiques secondaires soit la plus faible possible afin d'altérer au minimum les performances « instantanées » de l'ensemble de batterie et d'éviter, dans certains cas, tout emballement thermique.

Il est donc possible de gérer les différentes phases d'utilisation de l'ensemble de batterie, couplé à un chargeur à tension constante, sans effectuer de mesure de courant et en évitant l'emballement thermique.

Préférentiellement, le courant faible permanent est compris entre environ Ic/100 et Ic/5000, et plus préférentiellement entre Ic/500 et Ic/2000. La grandeur « Ic » désigne ici le courant Ic nécessaire en théorie pour décharger l'ensemble de batterie en une heure. Par exemple, si Ic = 40A (ampères), il représente l'équivalent en courant d'une capacité C de 40Ah (ampères heure).

Dans un premier mode de réalisation, les moyens de contrôle peuvent être agencés de manière à adresser au chargeur la consigne de charge, lorsqu'il est équipé d'une entrée adaptée à cet effet. Dans ce cas, il est avantageux que les moyens de contrôle soient agencés de manière à délivrer les consignes électriques au chargeur selon tout type de protocole imaginable, comme par exemple le protocole de type PWM (pour « Pulse Wave Modulation »), ou le protocole dit « des consignes 0-10 V », ou le protocole dit « des consignes 4-20 mA », ou encore à l'aide d'un bus CAN.

Dans un second mode de réalisation, dit « batterie autonome » (ou « smart battery »), on prévoit, en complément, des moyens de limitation de courant alimentés par le chargeur et agencés de manière à alimenter l'ensemble de batterie en fonction de la consigne électrique délivrée par les moyens de contrôle.

Dans un souci de standardisation, on peut imaginer que les deux modes de réalisation coexistent sur une même carte électronique.

Préférentiellement, les moyens de mesures permettent de délivrer aux moyens de contrôle des mesures de la tension locale aux bornes d'au moins l'un des générateurs électrochimiques secondaires (et éventuellement tous). Il est par ailleurs également préférable que les moyens de mesures permettent de délivrer aux moyens de contrôle des mesures de la température locale de l'un au moins des générateurs électrochimiques secondaires de l'ensemble de batterie.

Par ailleurs, le dispositif peut également comprendre une interface de communication couplée aux moyens de contrôle, de manière à échanger des données avec un équipement informatique externe permettant, par exemple, de modifier le fonctionnement des moyens de contrôle ou de prélever des données de fonctionnement qui retracent une partie au moins des événements survenus au niveau de l'ensemble de batterie.

L'invention porte également sur un ensemble de batterie intégrant un dispositif de contrôle du type de celui présenté ci-avant.

L'invention trouve des applications particulièrement intéressantes dans des domaines tels que celui des véhicules automobiles électriques, l'aéronautique, le transport ferroviaire, les stations au sol, l'outillage portatif, ou la téléphonie, notamment mobile.

D'autres caractéristiques et avantages de l'invention apparaîtront à l'examen de la description détaillée ci-après, et des dessins annexés, sur lesquels :

- la figure 1 est un schéma de principe illustrant le couplage entre un premier mode de réalisation d'un dispositif de contrôle selon l'invention, un ensemble de batterie, un chargeur et un équipement électrique,
- les figures 2A et 2B sont des schémas de principe illustrant le couplage entre un second mode de réalisation d'un dispositif de contrôle selon l'invention, un ensemble de batterie, un chargeur et un équipement électrique, respectivement dans la phase de charge de l'ensemble de batterie et d'alimentation de l'équipement électrique et dans la phase de décharge de l'ensemble de batterie par l'équipement électrique,
- la figure 3 illustre de façon schématique un exemple de réalisation d'un dispositif de contrôle selon l'invention, correspondant aux schémas de principe des figures 2A et 2B, et

- la figure 4 est un algorithme illustrant un exemple de mode de fonctionnement du dispositif selon l'invention.

Les dessins annexés pourront non seulement servir à compléter l'invention, mais aussi contribuer à sa définition, le cas échéant.

L'invention est destinée à permettre le contrôle de l'état de charge d'un ensemble de batterie, ci-après appelé batterie, constitué d'un ou plusieurs générateurs électrochimiques secondaires (ou rechargeables). Dans ce qui suit on considère, à titre d'exemple illustratif, que la batterie comporte n=3 générateurs électrochimiques secondaires montés en série et constituant, par exemple, des accumulateurs nickel / métal-hydrure (Ni/ MH) ou nickel / cadmium (Ni/Cd). Par ailleurs, on considère que la batterie est destinée, à titre d'exemple illustratif, à être implantée dans une station de secours du réseau électrique d'un centre informatique pour alimenter, en cas de défaut du réseau, ses principaux équipements électriques. Mais bien entendu, l'invention n'est pas limitée à cette application, et peut être utilisée dans d'autres domaines tels que l'aéronautique, le transport ferroviaire, les stations au sol, l'outillage portatif, et la téléphonie.

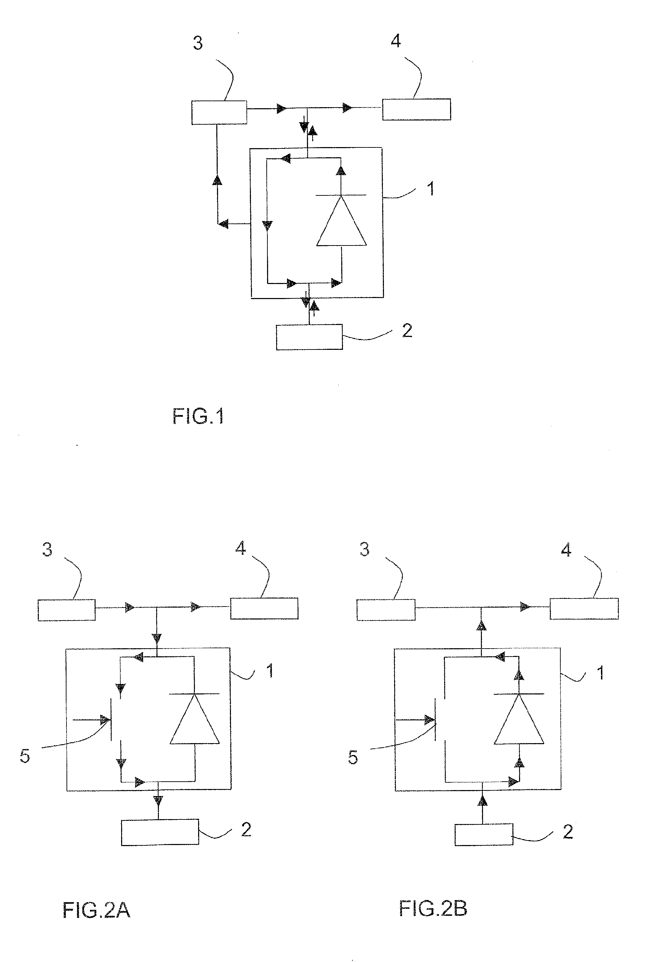

Afin de mettre en oeuvre son contrôle d'état de charge, l'invention propose un dispositif 1 destiné, comme illustré sur les figures 1 et 2, à être placé à l'interface entre une batterie 2, un chargeur 3, à tension constante, et un équipement électrique 4, également appelé application.

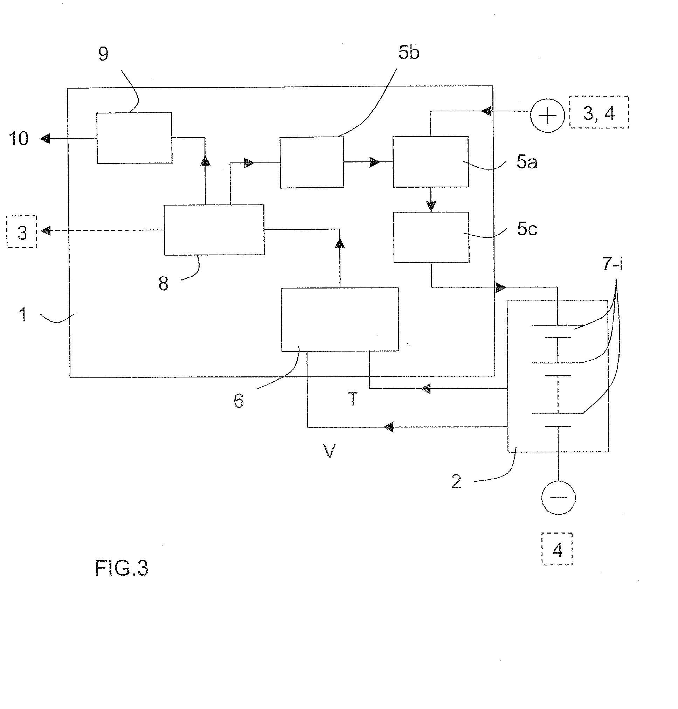

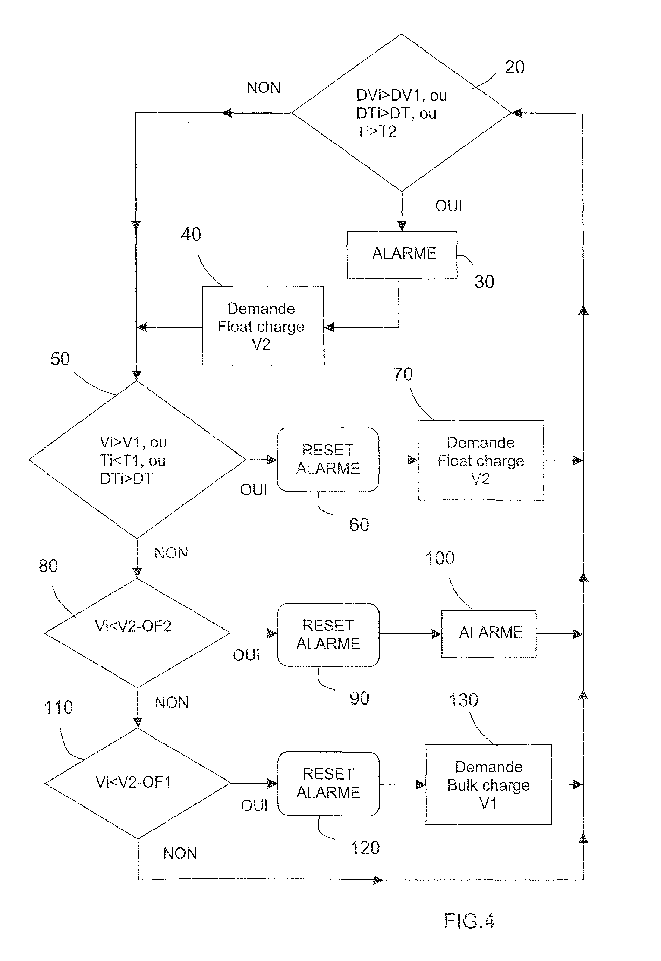

Plus précisément, dans le mode de réalisation illustré sur la figure 1, le dispositif 1 contrôle l'état de charge de la batterie 2 en indiquant au chargeur 3 la valeur de la tension (U) adaptée à la batterie à chaque instant. On reviendra plus loin, en référence aux figures 3 et 4, sur le mode d'action mis en oeuvre.

Lorsque la batterie 2 doit être rechargée, le dispositif 1 détermine la consigne électrique qui va permettre au chargeur 3 d'alimenter la batterie 2 avec une tension constante appropriée. Lorsque la batterie 2 est chargée et que l'application 4 requiert du courant (par exemple dans le cas d'un défaut d'alimentation du chargeur), ladite batterie 2 alimente ladite application 4. Enfin, lorsque le chargeur 3 se remet en fonctionnement, la batterie 2 étant insuffisamment chargée, le dispositif 1 détermine la consigne électrique qui va permettre au chargeur 3 d'alimenter la batterie 2 avec une tension constante appropriée, et dans le même temps le chargeur 2 alimente l'application 4 avec le courant requis. La tension appropriée dépend du couple électrochimique concerné.

Dans le mode de réalisation illustré sur les figures 2A et 2B, le chargeur délivre à la batterie 2, en continu, un courant donné sous une tension constante, et le dispositif 1 contrôle l'état de charge de la batterie 2 en agissant sur la valeur moyenne du courant qui alimente la batterie 2 à l'aide d'un hachage du courant réalisé par un module de limitation de courant 5. Ce hachage peut par exemple être réalisé par un composant électronique de type transistor à effet de champ (ou FET pour « Field Effect Transistor »). Ce mode de réalisation est appelé « batterie autonome » (ou « smart battery »).

Comme illustré sur la figure 2A, lorsque la batterie 2 doit être rechargée, le dispositif 1 détermine la consigne électrique qui va permettre au module de limitation de courant 5 d'alimenter la batterie 2 avec une partie au moins du courant délivré par le chargeur 3, à tension constante. Comme illustré sur la figure 2B, lorsque la batterie 2 est chargée et que l'application 4 requiert du courant (dans le cas d'un défaut du chargeur 3), ladite batterie 2 alimente ladite application 4 par l'intermédiaire d'une diode de puissance (pendant un lapse de temps très court), puis par l'intermédiaire d'un interrupteur placé en parallèle et fermé à cet effet. Enfin, lorsque le chargeur 3 est à nouveau « présent », mais que la batterie 2 est insuffisamment chargée, ledit chargeur 3 alimente directement l'application 4 avec le courant disponible et charge en parallèle la batterie de secours. Ce dernier cas correspond également à la figure 2A.

On se réfère maintenant à la figure 3 pour décrire en détail un exemple de réalisation d'un dispositif 1 selon l'invention, correspondant au cas illustré sur les figures 2A et 2B (« batterie autonome »).

Dans ce mode de réalisation, le dispositif 1 comporte tout d'abord un module de mesures 6 couplé à la batterie 2, de manière à mesurer, par exemple périodiquement, au moins deux grandeurs physiques qui la caractérisent, et notamment la tension aux bornes d'une partie au moins de celle-ci et la température d'une partie au moins de celle-ci. Préférentiellement, le module de mesures 6 délivre la tension locale aux bornes de l'un au moins des générateurs électrochimiques secondaires 7, et la température locale de l'un au moins desdits générateurs électrochimiques secondaires 7.

Dans un mode de réalisation moins sophistiqué, le module de mesures 6 pourrait ne délivrer que la tension totale aux bornes de la batterie et la température moyenne de la batterie 2.

Le dispositif 1 comporte également un module de contrôle 8 couplé au module de mesures 6 de manière à contrôler l'état de charge de la batterie 2 en fonction de ses caractéristiques intrinsèques et des mesures de tension U et de température T. C'est ce module qui calcule les consignes électriques qui permettent de gérer le courant qui alimente à chaque instant la batterie 2. Les consignes électriques (courant ou tension) sont calculées, comme on le verra plus loin, en fonction des mesures de tension et de température délivrées par le module de mesures 6. Ces consignes sont proportionnelles aux courants (ou tensions) nécessaires au bon fonctionnement de la batterie 2. Typiquement elles sont généralement comprises entre 0 et 1,5 V (volts) par accumulateur (dans le cas des accumulateurs alcalins).

Ce module de contrôle 8 est préférentiellement réalisé sous la forme d'un microcontrôleur (ou d'un ASIC) programmé, par exemple en langage C, en fonction du type de la batterie 2, et éventuellement du type d'application 4 à laquelle elle est couplée. Il est ici couplé à un module de limitation de courant 5 constitué, dans cet exemple, de trois parties. Une première partie 5a est couplée, d'une part, à une sortie du chargeur 3 (et à une entrée de l'application 4), matérialisée par la borne « + », et d'autre part, à l'une des bornes de la batterie 2 (l'autre borne, matérialisée par le signe « - », étant raccordée à l'application 4). Il s'agit d'un module capable de réduire, sur instruction, la valeur du courant délivré par le chargeur 3. Une seconde partie 5b assure la conversion des instructions de consigne électrique délivrées par le module de contrôle 8 en instructions permettant au module 5a de fixer le niveau de réduction du courant délivré par le chargeur 3. Une troisième partie 5c, optionnelle, est interposée entre la sortie du module 5a et l'entrée de la batterie 2 afin d'assurer la protection de ladite batterie 2.

Par ailleurs, afin de permettre la reprogrammation du module de contrôle 8 et/ou la collecte des données de fonctionnement, que celui-ci stocke, éventuellement, dans une mémoire (non représentée) et qui retracent une partie au moins des événements survenus au niveau de la batterie 2, le dispositif 1 peut comporter une interface de communications 9, par exemple de type RS232, couplée au module de contrôle 8 et susceptible d'être raccordée à un équipement informatique 10, comme par exemple un ordinateur portable.

D'autre part, lorsque le dispositif 1 ne comporte pas de module de limitation de courant 5 (ou 5a-5c), et par conséquent lorsqu'il correspond au cas illustré sur la figure 1, le module de contrôle 8 comporte une sortie (matérialisée par la flèche en pointillé sur la figure 3) raccordée au chargeur 2 de manière à pouvoir lui délivrer les données représentatives des consignes électriques (lorsque le chargeur est capable de les interpréter). Dans ce cas, l'échange de données peut s'effectuer, par exemple, selon un protocole de type PWM (pour « Pulse Wave Modulation »), ou selon une consigne analogique de type 0-10 V ou 4-20 mA, ou à l'aide d'un bus CAN. Dans ce mode de réalisation, il est rappelé que le chargeur 3 délivre sur sa sortie un courant variable en fonction des consignes électriques reçues du module de contrôle 8, et sous une tension constante, tandis que dans le mode de réalisation comportant un module de limitation de courant 5, c'est ce dernier qui conditionne, par hachage du courant sur sa sortie, un courant variable en fonction des consignes électriques reçues du module de contrôle 8 et du courant d'intensité variable (de 0 à I max) délivré par le chargeur 3, sous une tension constante.

En outre, le module de contrôle 8 peut être programmé de manière à gérer l'état de santé de la batterie 2. Il peut notamment détecter les défaillances, et éventuellement les prédire, mais aussi indiquer l'état de charge. Ces informations peuvent être stockées afin d'être traitées par un opérateur, après extraction via l'interface de communication (par exemple de type RS232).

On se réfère maintenant à la figure 4 pour décrire un exemple de mode de fonctionnement du dispositif 1 selon l'invention.

Le module de contrôle 8 gère principalement trois phases.

Dans une première phase, la batterie 2 est légèrement déchargée. La tension totale à ses bornes V est devenue inférieure à une tension limite V4. La batterie 2 a besoin, par conséquent, d'être rechargée sous un régime rapide par le chargeur 3, à tension constante et sous le courant (I/BC = 1/n) le plus élevé que peut fournir le chargeur 3, jusqu'à une consigne électrique de tension déterminée par le module de contrôle 8, de manière à revenir à la valeur V1 correspondant à sa quasi-pleine charge. Cette phase de charge rapide est dite « bulk charge ».

La fin de la bulk charge se caractérise, d'une première part, par une pente de température DTi supérieure à un seuil DT, d'une deuxième part, une tension Vi aux bornes d'une partie i au moins de la batterie 2 (ou de l'un de ses générateurs électrochimiques secondaires 7-i), supérieure à V1, et d'une troisième part, une température Ti, d'une partie i au moins de la batterie 2 (ou de l'un de ses générateurs électrochimiques secondaires 7-i), inférieure à une température théorique T1.

Par conséquent, les critères de détection de fin de charge sont, par exemple :

- 
$$DT = KDT1 + KDT2 * I/BC,$$

- si Ti < T3, V1 = KV1 + KT1 * Ti + KC1 * I/BC, où T3 est un seuil de température variable en fonction de la loi qui gère le seuil de détection, laquelle peut être différente à haute ou basse température,
- si Ti > T3, V1 = KV2 + KT2 * Ti + KC2 * I/BC, et
- Ti < T1, où T1 est une température limite haute de bon fonctionnement de la batterie ou d'altération de sa durée de vie.

Par ailleurs, des alarmes sont préférentiellement émises lorsque les conditions suivantes surviennent (ces alarmes ont pour but de signaler à l'utilisateur un fonctionnement anormal, temporaire ou permanent) :

- DVi > DV1, ou
- Ti > T2, ou
- δTi > DTC, où δTi représente l'écart de température entre deux parties d'une batterie.

Dans une deuxième phase la batterie 2 présente une tension totale à ses bornes qui est supérieure à la tension limite V1. Elle est maintenue dans cet état de charge soit en imposant une tension V2 au chargeur 3 dans le cas d'une régulation directe, soit en hachant le courant par l'intermédiaire du module de limitation de courant 5 en réglant le temps d'ouverture du relais de manière à générer un courant moyen « C/n » compris entre C/2000 et C/50 dans le cas s'un système alcalin, par exemple. Cette phase de décharge est dite « float charge », dans la mesure où elle s'effectue sous une charge permanente (« floating ») du chargeur 3. La valeur de ce courant C/n dépend du couple électrochimique concerné.

La tension théorique V2 peut être définie par la relation V2 = KV3 + KT3 * Ti.

La fin de la float charge ne se caractérise pas, dans la mesure où elle est interrompue par la décharge suivante. Mais, une alarme est préférentiellement émise lorsque les conditions suivantes surviennent :

- DVi > DV1, en cas de dispersion des états de charge au sein de la batterie,
- Ti > T2, en cas de tendance à l'emballement thermique, ou
- δTi > DTC, en cas de fonctionnement non homogène de la batterie.

Dans une troisième phase la batterie 2 s'est largement déchargée dans le cas d'un défaut de chargeur 3 prolongé. Cette phase correspond à un état dit de « décharge » associé à une tension limite V3.

Une alarme est préférentiellement émise lorsque les conditions suivantes surviennent :

- DVi > DV1, ou
- Vi < V3 (on peut définir V3 à partir de V2, proche de la tension en circuit ouvert pour un état de charge d'environ 100% ; par exemple V3 = V2 - OF2), ou
- Ti > T2.

Par ailleurs, le retour à la phase bulk charge en vue de revenir à la pleine charge peut être déclenché par la condition Vi < V4, où V4 peut être également définie à partir de V2 ; par exemple V4 = V2 - OF1. Cela permet de ne pas recharger à fort régime des batteries qui ne sont pratiquement pas déchargées et donc d'éviter de les faire chauffer sans nécessité de retour rapide à un état de charge élevé.

Il est important de noter que les valeurs des variables précitées dépendent du couple électrochimique concerné.

Un algorithme de gestion des trois phases décrites ci-avant peut commencer par un premier test (étape 20 de la figure 4). Dans cette étape 20, le module de contrôle détermine DVi et DTi à partir des mesures fournies par le module de mesures 6. Puis, il compare, d'une première part, DVi au seuil DV1, d'une deuxième part, DTi au seuil DT, et d'une troisième part, Ti à T2 pour vérifier l'état de « santé » de la batterie.

Si le résultat du test de l'étape 20 indique que DVi est supérieur à DV1, ou que DTi est supérieur à DT, ou encore que Ti est supérieur à T2, cela signifie qu'il existe une anomalie et qu'il est préférable de placer la batterie 2 dans son état de float charge pour essayer de faire disparaître la disparité (en la signalant et éventuellement en la mémorisant). Le module de contrôle 8 génère alors dans une étape 30 une alarme qu'il mémorise préférentiellement dans l'une de ses mémoires, afin que leurs contenus puissent être analysés a posteriori et que l'on puisse vérifier si le problème survenu est ponctuel ou récurrent. Puis, dans une étape 40, il déclenche une phase de float charge sous la tension V2. Puis, le module de contrôle 8 passe à une étape 50.

Si le résultat du test de l'étape 20 indique que $DV_i$ est inférieur à DV1, que $DT_i$ est inférieur à DT, et que $T_i$ est inférieur à T2, alors on passe directement à l'étape 50.

L'étape 50 est destinée à vérifier si les conditions de fin de bulk charge sont remplies. Elle consiste à effectuer un triple test sur les valeurs des tension $V_i$ et température $T_i$ du générateur électrochimique secondaire 7-i. Si le résultat du test de l'étape 50 indique que $V_i$ est supérieur à V1, ou que $T_i$ est inférieur à T1, ou encore que $DT_i$ est supérieur à DT, cela signifie que la batterie 2 est en état de surcharge (ou abus), c'est-à-dire au-delà de l'état de bulk charge. Le module de contrôle 8 remet alors l'alarme dans son état initial (« reset ») (étape 60), puis il déclenche une phase de float charge sous la tension V2 (étape 70) afin de maintenir l'état de charge maximum atteint. Cela ramène à l'étape 20.

En revanche, si le résultat du test de l'étape 50 indique que $V_i$ est inférieur à V1, que $T_i$ est supérieur à T1, ou que $DT_i$ est inférieur à DT, alors on passe à l'étape 80.

L'étape 80 est destinée à vérifier si la fin de décharge est atteinte. Elle consiste à effectuer un test sur la valeur de la tension $V_i$ de l'une au moins de ses parties afin de déterminer si la batterie 2 est déchargée à 100%. Si le résultat de ce test indique que $V_i$ est inférieur à la tension théorique V3, cela signifie que la batterie 2 s'est déchargée en dessous de la limite autorisée. Le module de contrôle 8 remet à l'état initial (« reset ») l'alarme (étape 90), puis il génère une alarme (étape 100) qu'il mémorise préférentiellement dans l'une de ses mémoires. Ensuite, selon l'application, soit on laisse connectée la batterie 2 au risque de la détruire, soit on décide d'ouvrir le circuit. Puis, on retourne à l'étape 20.

En revanche, si le résultat du test de l'étape 80 indique que $V_i$ est supérieur à V3, cela signifie qu'il faut peut être recharger la batterie 2. Pour le déterminer on passe à une étape 110.

Cette étape 110 consiste à effectuer un nouveau test sur la valeur de la tension $V_i$ du générateur électrochimique secondaire 7-i. Si le résultat de ce test indique que $V_i$ est supérieur à la tension théorique V3, mais supérieur à une tension théorique V4, cela signifie que la batterie 2 est suffisamment déchargée pour être rechargée en mode bulk charge. Le module de contrôle 8 désactive l'alarme (« reset ») (étape 120), puis il demande une phase de bulk charge sous la tension V1 (étape 130), ce qui ramène à l'étape 20. La valeur de OF1 doit alors être suffisamment forte pour autoriser le redémarrage en mode bulk charge pour des profondeurs de décharge supérieures à 5%. Par ailleurs, la valeur de OF2 doit être suffisamment élevée pour détecter à coup sûr une fin de décharge.

En revanche, si le résultat du test de l'étape 110 indique que $V_i$ est supérieur à V3 et V4, cela signifie que l'on reste en mode bulk charge. La situation étant « normale », on retourne à l'étape 20.

L'algorithme (ou procédé) qui vient d'être décrit, portait sur des comparaisons entre des seuils (ou limites) et des mesures « locales » effectuées sur une partie i de la batterie 2. Mais, l'algorithme pourrait s'appliquer successivement à plusieurs parties de la batterie 2, voire même à chaque générateur électrochimique secondaire 7-i. De même, l'algorithme pourrait s'appliquer à toute la batterie 2. Dans ce cas, on devrait mesurer la tension aux bornes de la batterie 2 et la température moyenne de la batterie.

Par ailleurs, on a décrit un dispositif de contrôle séparé de l'ensemble de batterie et raccordé à celui-ci. Mais, le dispositif de contrôle peut être intégré directement dans l'ensemble de batterie.

En outre, le dispositif de contrôle peut être agencé sous la forme d'une carte électronique, par exemple en forme de nappe, intégrable à la connectique de la batterie.

L'invention ne se limite pas aux modes de réalisation de dispositif de contrôle et d'ensemble de batterie décrits ci-avant, seulement à titre d'exemple, mais elle englobe toutes les variantes que pourra envisager l'homme de l'art dans le cadre des revendications ci-après.

**Revendications**

1.  Dispositif de contrôle de charge (1) d'un ensemble de batterie (2), à générateur(s) électrochimique(s) secondaire(s) (7), interfacé entre un chargeur de batterie (3), l'ensemble de batterie et au moins un équipement électrique (4), **caractérisé en ce qu'**il comprend i) des moyens de mesures (6) agencés de manière à délivrer des mesures d'une première grandeur physique, représentative d'au moins une tension (U) aux bornes d'une partie au moins dudit ensemble de batterie (2), et d'une seconde grandeur physique, représentative d'au moins une température (T) d'une partie au moins dudit ensemble de batterie (2), et ii) des moyens de contrôle (8) agencés pour déterminer, en fonction des mesures desdites première et seconde grandeurs, une consigne électrique permettant de maintenir l'ensemble de batterie (2) à l'aide d'un courant faible permanent et à tension constante, dans un état de charge choisi et une température moyenne sensiblement inférieure à un seuil choisi, sans effectuer de mesure dudit courant.

2. Dispositif selon la revendication 1, **caractérisé en ce que** lesdits moyens de contrôle (8) sont agencés pour adresser audit chargeur (3) ladite consigne de charge.

3. Dispositif selon la revendication 2, **caractérisé en ce que** lesdits moyens de contrôle sont agencés de manière à délivrer la consigne électrique audit chargeur selon un protocole choisi parmi le protocole dit « PWM », le protocole dit « 0-10 V » et le protocole dit « 4-20 mA ».

4. Dispositif selon la revendication 1, **caractérisé en ce qu'**il comprend des moyens de limitation de courant (5) alimentés en courant par ledit chargeur (3) et agencés de manière à alimenter ledit ensemble de batterie (2) en fonction de ladite consigne électrique délivrée par lesdits moyens de contrôle (8).

5. Dispositif selon l'une des revendications 1 à 4, **caractérisé en ce que** ladite consigne électrique est représentative d'un courant.

6. Dispositif selon l'une des revendications 1 à 4, **caractérisé en ce que** ladite consigne électrique est représentative d'une tension.

7. Dispositif selon l'une des revendications 1 à 6, **caractérisé en ce que** lesdits moyens de mesures (6) sont agencés pour délivrer auxdits moyens de contrôle (8) des mesures de la tension locale aux bornes d'au moins l'un des générateurs électrochimiques secondaires (7) dudit ensemble de batterie.

8. Dispositif selon la revendication 7, **caractérisé en ce que** lesdits moyens de mesures (6) sont agencés pour délivrer auxdits moyens de contrôle (8) des mesures de la tension locale aux bornes de chaque générateur électrochimique secondaire (7) dudit ensemble de batterie (2).

9. Dispositif selon l'une des revendications 1 à 8, **caractérisé en ce que** lesdits moyens de mesures (6) sont agencés pour délivrer auxdits moyens de contrôle (8) des mesures de la température locale d'au moins l'un des générateurs électrochimiques secondaires (7) dudit ensemble de batterie (2).

10. Dispositif selon l'une des revendications 1 à 9, **caractérisé en ce que** ledit courant faible de charge est compris entre environ Ic/100 et Ic/5000, et en particulier entre Ic/500 et Ic/2000.

11. Dispositif selon l'une des revendications 1 à 10, **caractérisé en ce qu'**il comprend une interface de communication (9) couplée auxdits moyens de contrôle (8).

12. Ensemble de batterie (2) à générateur(s) électrochimique(s) secondaire(s) (7), **caractérisé en ce qu'**il est équipé d'un dispositif de contrôle (1) selon l'une des revendications précédentes.

13. Ensemble de batterie (2) selon la revendication précédente, **caractérisé en ce que** lesdits générateurs électrochimiques secondaires (7) sont choisis dans un groupe comprenant au moins les accumulateurs nickel /métal-hydrure (Ni/MH), les accumulateurs nickel / cadmium (Ni/Cd), les accumulateurs lithium / ion (Li/Ion) et $Pb/PbO_2$.

14. Utilisation du dispositif de contrôle (1) et de l'ensemble de batterie (2) selon l'une des revendications précédentes, dans un domaine choisi dans un groupe comprenant les véhicules automobiles électriques, l'aéronautique, le transport ferroviaire, les stations au sol, les outillages portatif et la téléphonie.

FIG.1

FIG.2A

FIG.2B

FIG.3

NON — 20 — DVi>DV1, ou DTi>DT, ou Ti>T2

OUI

ALARME — 30

40 — Demande Float charge V2

50 — Vi>V1, ou Ti<T1, ou DTi>DT

OUI — RESET ALARME — 60 — 70 — Demande Float charge V2

NON

80 — Vi<V2-OF2

OUI — RESET ALARME — 90 — 100 — ALARME

NON

110 — Vi<V2-OF1

OUI — RESET ALARME — 120 — 130 — Demande Bulk charge V1

NON

FIG.4